# EUROPEAN PATENT APPLICATION

(11) **EP 4 776 092 A1**
(43) Date of publication of application: **15.07.2026**
(21) Application number: 24862629.3
(22) Date of filing: 26.08.2024
(51) Int. Cl.: G05D 1/244, A63H 18/16, G05D 1/43

(54) **TRAVEL SYSTEM AND TRAVEL PATH**

(30) Priority: 04.09.2023 JP 2023143189
(71) Applicant: Teamlab Inc., Tokyo 101-0052 (JP)
(72) Inventor: HATTORI Kohei, Tokyo 101-0052 (JP); KANAMURA Momomi, Tokyo 101-0052 (JP); TANEMOTO Miyabi, Tokyo 101-0052 (JP)
(74) Representative: Moser Götze & Partner Patentanwälte mbB
(86) International application number: PCT/JP2024/030168
(87) International publication number: WO 2025/052977

(57) **Abstract**

[Solution]

The present invention relates to a system (100) comprising a travel path (10) and a travel device (20) that travels on the travel path (10). The travel path (10) includes: a mirror surface (11); a film (12) which is provided on the mirror surface and which blocks light of a specific wavelength outside the visible range; and a guide line (13) which is provided on the film (12) and which reflects light of the specific wavelength. The traveling device (20) includes: a sensor which detects the guide line (13) by emitting light of the specific wavelength; and a travel control means that travels along the guide line (13) on the basis of detection information from the sensor.

## Description

### Technical Field

The present invention relates to a system that includes a traveling apparatus capable of autonomously traveling and a travel path guiding the traveling apparatus. The present invention also relates to the travel path itself.

### Background Art

A traveling toy that autonomously travels along a track drawn on a travel surface has been known (e.g., PTL1). The traveling toy according to PTL1 includes a photo sensor (optical sensor) to detect the track drawn on the travel surface. The traveling toy is configured to optically detect the track with the photo sensor in response to reflected light from the travel surface. PTL1 describes that the track on the travel surface may be, for example, a line drawn with a permanent marker, a tape attached to the travel surface, or the like.

### Citation List

### Patent Literature

[PTL1] JP 2006-181241 A

### Summary of Invention

### Technical Problem

The applicant is considering the development of a system that causes a traveling apparatus to automatically travel by using a guide line drawn on a mirror. The applicant considers that causing the traveling apparatus to travel on the mirror in this manner can make a viewer visually recognize the traveling apparatus as if the traveling apparatus is floating in the air.

Unfortunately, in the case where a photo sensor is installed in such a system using the mirror to detect the guide line, as with the traveling apparatus disclosed in PTL1, light reflected by the mirror is directly incident on the light-receiving element of the photo sensor, thus causing such a problem that the photo sensor tends to erroneously detect the guide line. That is, light emitted from a light-projecting element of the photo sensor is reflected by the mirror to be incident on a light-receiving element with its light energy kept high, or disturbance light reflected by the mirror is easily incident on the light-receiving element, and it is thus difficult to accurately detect the guide line on the mirror with the photo sensor of the traveling apparatus.

Drawing the guide line directly on the mirror with an oil-based marker or the like causes such a problem that changing the moving route of the traveling apparatus or removing the guide line requires the guide line on the mirror to be completely erased, which is troublesome. Note that this also applies to the case where the guide line is formed by attaching a tape or the like on the mirror. Changing the route of the traveling apparatus or removing the guide line takes the extra step of removing the tape from the mirror. Thus, it is not preferable to form the guide line directly on the mirror.

In the case where a guide line for a traveling apparatus is drawn with an oil-based marker or the like in a system using a mirror as disclosed in PTL1, the guide line is visually conspicuous, causing such a problem that it is difficult to give a viewer such an impression that the traveling apparatus is floating in the air, and the aesthetic appearance of the entire system is impaired. In addition, the guide line drawn with an oil-based marker or the like allows a viewer to easily predict the moving route of the traveling apparatus, and it is thus difficult to surprise the viewer.

Hence, a principal object of the present invention is to solve at least one of the above-described problems in a system in which a traveling apparatus autonomously travels on a mirror.

### Solution to Problem

A first aspect of the present invention relates to a travel system 100. The travel system 100 according to the present invention includes a travel path 10 and a traveling apparatus 20 that travels on the travel path 10. The travel path 10 includes a mirror 11, a film 12, and a guide line 13. The mirror 11 is a planar member that reflects light. Note that a one-way mirror can also be employed as the mirror 11. The film 12 is provided on the mirror 11 and blocks light of a specific wavelength outside a visible range (about 380 to 800 nm). Note that the "blocking" of light means absorbing or diffusing light to hinder the light from passing, and also encompasses not only completely hindering the light from passing but also attenuating part of its light energy. Thus, in the region where the film 12 is attached to the mirror 11, the light of the specific wavelength is blocked by the film 12 and does not reach the mirror 11, or even in the case where the light is reflected by the mirror 11, most of the light does not pass through the film 12. Although the film 12 is preferably attached to the entire mirror 11, the attachment is not limited to this, and the film 12 only needs to be attached to the mirror 11 at least along and in the vicinity of the moving route of the traveling apparatus 20. The guide line 13 is provided on the film 12 and is configured to reflect light of the specific wavelength. That is, in the case where the guide line 13 provided on the film 12 is irradiated with light of the specific wavelength, the light is reflected by only the guide line 13, and most of the light is not reflected in the region where the film 12 is attached. Note that the phrase "reflect light of the specific wavelength" mentioned here means, in a broad sense, receiving light having a component of the specific wavelength and emitting light of some wavelength. Specifically, the term "reflect" mentioned here encompasses not only a case where light of the specific wavelength is reflected as it is, but also a case where light of the specific wavelength is absorbed and light of another wavelength is emitted and a case where only light of the specific wavelength is reflected out of light including components of different wavelengths, such as natural light. Meanwhile, the traveling apparatus 20 includes a sensor 27 and travel controlling means 21 to 26. The sensor 27 irradiates light of the specific wavelength to detect the guide line 13 on the mirror 11. Note that it is sufficient that the light irradiated from the sensor 27 includes at least a component of the specific wavelength. The light may additionally include another wavelength component. The travel controlling means 21 to 26 include various elements for traveling along the guide line 13 on the basis of detection information from the sensor 27.

Attaching the film 12 that blocks (absorbs, diffuses, or the like) light of the specific wavelength to the mirror 11 and providing, on the film 12, the guide line 13 that reflects light of the specific wavelength, as with the configuration described above, makes it possible to prevent the sensor 27 of the traveling apparatus 20 from erroneously detecting the guide line 13 even in the case where the traveling apparatus 20 travels on the mirror 11. In addition, in the present invention, the guide line 13 is not formed directly on the mirror 11; instead, the film 12 is provided on the mirror 11, and the guide line 13 is formed on the film 12. Thus, the guide line 13 can be easily changed or removed by peeling off the film 12.

In the travel system 100 according to the present invention, the guide line 13 preferably emits, upon receiving light of the specific wavelength, light of another wavelength. As the guide line 13, for example, a guide line containing a fluorescence pigment can be employed. The guide line 13 containing a fluorescence pigment absorbs light energy corresponding to a given wavelength and radiates light of a wavelength different from that of the energy (a wavelength longer than the given wavelength). Specifically, as the fluorescence pigment to be contained in the guide line 13, one that absorbs ultraviolet light and emits visible light can be used. This makes it easy to detect the guide line 13 with the sensor 27 of the traveling apparatus 20. In particular, using a fluorescence pigment having a powder color close to white as the fluorescence pigment of the guide line 13 makes the guide line 13 inconspicuous to a viewer even in the case where the guide line 13 is drawn on the mirror 11. This does not impair the aesthetic appearance of the entire system as compared with the case of the guide line 13 drawn with an oil-based marker or the like, and consequently gives a viewer such an impression that the traveling apparatus 20 is floating in the air.

In the travel system 100 according to the present invention, the film 12 is preferably a transparent or translucent film that transmits light within a visible light range. This can avoid, even in the case where the film 12 is attached to the mirror 11, the impairment of the aesthetic appearance of the mirror 11 due to the film 12.

A second aspect of the present invention relates to the travel path 10 on which the traveling apparatus 20 is to travel. As mentioned above, the travel path 10 includes the mirror 11, the film 12 provided on the mirror 11 and blocking light of the specific wavelength outside the visible range, and the guide line 13 provided on the film 12 and reflecting light of the specific wavelength to guide the travel of the traveling apparatus 20.

### Advantageous Effects of Invention

According to the present invention, it is possible to provide a system in which a traveling apparatus autonomously travels on a mirror.

### Brief Description of Drawings

Fig. 1 is a schematic diagram illustrating an example of a traveling apparatus that autonomously travels on a mirror of a travel path.
Fig. 2 is a perspective view illustrating an example of the travel path.
Fig. 3 is an exploded perspective view illustrating constituent elements of the travel path.
Fig. 4 is a block diagram illustrating an example of constituent elements of the traveling apparatus.
Fig. 5 is a cross-sectional view schematically illustrating how a guide line of the travel path is detected with a sensor of the traveling apparatus.
Fig. 6 is a block diagram illustrating an example of constituent elements of a control device of the traveling apparatus.

### Description of Embodiments

An embodiment for practicing the present invention will be described below with reference to the drawings. The present invention is not limited to the embodiment described below but encompasses modifications that are made by those skilled in the art as appropriate within a scope obvious to those skilled in the art from the following embodiment.

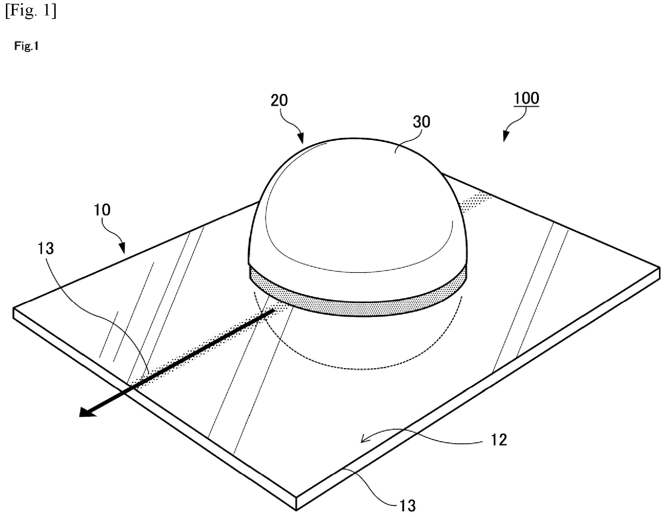

Fig. 1 illustrates how a traveling apparatus 20 travels on a mirror of a travel path 10. Note that Fig. 1 illustrates an extracted part of the travel path 10 around the traveling apparatus 20. In normal cases, the travel path 10 extends forward, backward, rightward, and leftward from the traveling apparatus 20. As illustrated in Fig. 1, the traveling apparatus 20 according to the present embodiment is substantially entirely covered with a cover 30 that is in a hemispherical shape. The travel surface of the travel path 10 has a mirror, in which the traveling apparatus 20 in a hemispherical shape is reflected. As a result, a viewer who visually recognizes the real traveling apparatus 20 and a mirrored image of the traveling apparatus 20 reflected in the travel path 10 sees the traveling apparatus 20 and the mirrored image in combination as if a substantially spherical object is floating in the air. Note that the traveling apparatus 20 includes a light-emitting element inside the cover 30, and light emitted from the light-emitting element passes through the cover 30. Thus, the traveling apparatus 20 traveling on the travel path 10 can be visually recognized even in darkness.

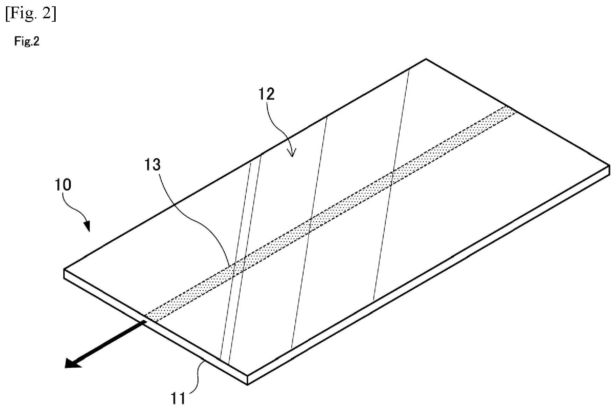

As illustrated in Fig. 1 and Fig. 2, the travel path 10 is provided with a guide line 13, which is formed using an inconspicuous paint or tape. The traveling apparatus 20 detects the guide line 13 with a sensor and performs autonomous control so as to travel along the guide line 13. This will be described in detail later. In combination with the traveling apparatus 20 traveling on the mirror, this makes it difficult to predict the traveling route of the traveling apparatus 20 and can thus interest viewers.

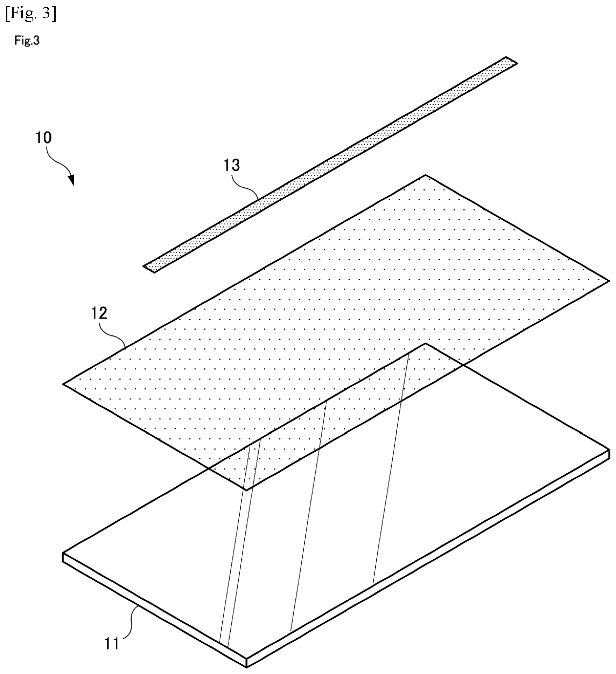

First, with reference to Fig. 2 and Fig. 3, a configuration example of the travel path 10 will be described. As illustrated in Fig. 2 and Fig. 3, the travel path 10 includes a mirror 11, a film 12, and the guide line 13, which are stacked upward in this order. That is, the film 12 is attached to the mirror 11, and the guide line 13 is formed on the film 12. Although not illustrated, the travel path 10 may include, under the mirror 11, a base (made of metal, plastic, wood, or the like) to support the mirror 11.

As the mirror 11, a typical mirror that reflects light (specifically, visible light) can be used. For example, as the mirror 11, a polished mirror, which is formed by mirror polishing a surface of a metal such as a stainless steel, or a deposited mirror, which is formed by vapor-depositing a metal having a high reflectivity, such as silver or aluminum, on one surface of a transparent plate such as a glass plate or an acrylic plate, can be employed. As the mirror 11, a typical mirror that has a light reflectivity of 80 to 100% as well as a one-way mirror that has a light reflectivity of less than 80% and a light transmittance of 10 to 50% can also be used. Note that, assuming that incident light is taken as 100%, the sum of the reflectivity, transmittance, and absorptivity is 100%. A typical one-way mirror has a reflectivity of 20 to 40%, a transmittance of 20 to 40%, and the remaining portion is its absorptivity.

The film 12 is a transparent film that is attached to the mirror 11. Note that the film 12 is not necessarily attached to the entire mirror 11. The film 12 only needs to be attached to the mirror 11 along or in the vicinity of the moving route of the traveling apparatus 20, more specifically, within a region where the mirror 11 can be irradiated with light emitted from a sensor of the traveling apparatus 20. The film 12 has the property of transmitting the visible light and blocking (absorbing, diffusing, or the like) light of a specific wavelength outside the visible range. Specifically, as the film 12, a typical UV blocking film is preferably used. The UV blocking film is capable of blocking ultraviolet light (light having a wavelength of 380 nm or less) to prevent the ultraviolet light from passing through the film while transmitting the visible light. The UV blocking film is not limited to a particular structure. For example, the UV blocking film may include transparent plastic films stacked and bonded together using an adhesive layer containing a UV absorbent. By using a transparent film as the film 12 as above, the aesthetic appearance of the travel path 10 will not be impaired even in the case where the film 12 is attached to the mirror 11.

The guide line 13 is a line formed on the film 12. The guide line 13 is to be detected by the traveling apparatus 20. The guide line 13 preferably reflects light of the wavelength that is blocked by the film 12. For example, in the case where a film blocking ultraviolet light is used as the film 12, a guide line that reflects at least the ultraviolet light can be used as the guide line 13. Specifically, the guide line 13 can be made to contain a fluorescence pigment, which has the property of receiving ultraviolet light to jump to an excited state and emitting visible light when returning to a ground state (photoluminescence). As the fluorescence pigment, it is particularly preferable to use a fluorescence pigment having a white powder color and having a chromatic luminescent color such as blue, yellow, green, red, or orange. Note that "white" refers to a color having an L* value in the CIE-L*a*b* color system of 60 or more, particularly, 80 or more, and "chromatic" refers to a color other than white. By applying a paint containing such a fluorescence pigment, the guide line 13 can be drawn on the film 12. The guide line 13 can also be formed by attaching a tape containing such a fluorescence pigment to the film 12. In particular, using the fluorescence pigment having the white powder color to form the guide line 13 makes the guide line 13 on the mirror 11 inconspicuous unless the guide line 13 is irradiated with ultraviolet light (black light). Accordingly, the guide line 13 will not impair the aesthetic appearance of the travel path 10, either.

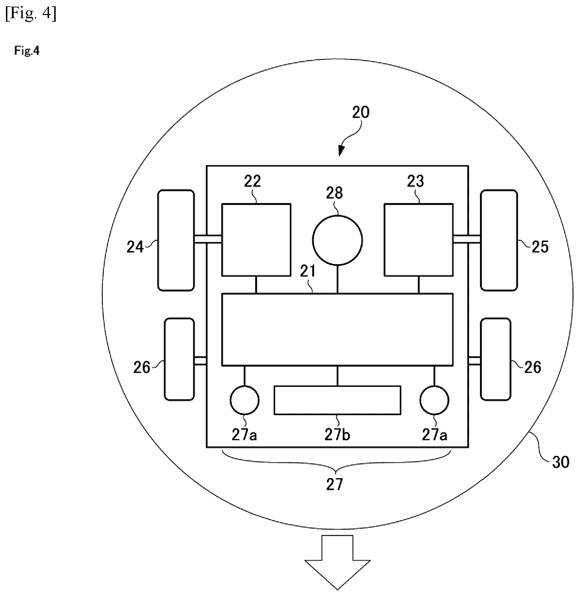

Next, with reference to Fig. 4 to Fig. 6, a configuration example of the traveling apparatus 20 will be described. As illustrated in Fig. 4, the traveling apparatus 20 includes a control device 21 and two motors 22, 23. The motors 22, 23 are electrically connected to the control device 21 via the electronic substrate or the like and are controlled by the control device 21. To the motors 22, 23, wheels 24, 25 are independently attached, respectively. Supplied with electric power from a battery (not illustrated), the motors 22, 23 are driven to rotate the wheels 24, 25, respectively, and the traveling apparatus 20 obtains a driving force from the wheels 24, 25 that are in contact with the surface of the travel path 10. In the present embodiment, the traveling apparatus 20 employs a rear wheel drive system. Thus, the motors 22, 23 are installed at a rear portion of a chassis of the traveling apparatus 20. In the illustrated example, with respect to a running direction of the traveling apparatus 20, a first motor 22 is a motor that rotates a first wheel 24 on the right side, and a second motor 23 is a motor that rotates a second wheel 25 on the left side. Note that the traveling apparatus 20 is not limited to the rear wheel drive system and may employ a front wheel drive system.

As the motors 22, 23, known motors can be employed. Specifically, each of the motors 22, 23 includes a rotary part that includes a stator and a rotor, and an output shaft (shaft) to output a rotating force obtained by the rotary part to the outside. Likewise, as the wheels 24, 25, known wheels can be employed. Specifically, each of the wheels 24, 25 includes a wheel member that is made of metal or plastic, and a tire member that is made of rubber, is attached to the outer circumference of the wheel member, and produces a high frictional force. Note that the tire member is consumable and can thus be detached from the wheel member and replaced as appropriate. In the present embodiment, the wheel members of the wheels 24, 25 are directly fixed to the output shafts of the motors 22, 23, respectively. Note that the wheel members may be fixed to the respective output shafts by means of frictional force generated therebetween, or a known fixing method, such as using an adhesive or welding, may be adopted. Alternatively, the output shaft of each motor and wheel member of the corresponding wheel can be interlocked with an intermediate component interposed therebetween, such as gears and a shaft.

In addition to the above-described wheels 24, 25 (drive wheels) fixed to the motors 22, 23, the traveling apparatus 20 includes one or more non-driving wheels 26 that are in contact with the surface of the travel path 10, as illustrated in Fig. 4. The one or more non-driving wheels 26 are not connected to a driving source such as a motor, and are wheels that assist the traveling of the traveling apparatus 20. In the present embodiment, the non-driving wheels 26 are arranged at two locations on the right and left sides of a front portion of the chassis of the traveling apparatus 20. Note that the number of non-driving wheels 26 can be increased or decreased in accordance with the size or the like of the traveling apparatus 20.

As illustrated in Fig. 4, the traveling apparatus 20 includes a sensor 27 to detect the guide line 13 of the travel path 10. The sensor 27 is connected to the control device 21 and transmits detection information to the control device 21. As mentioned above, the guide line 13 reflects light of the specific wavelength. Thus, as the sensor 27, a photoelectronic sensor capable of detecting the guide line 13 by projecting the light of the specific wavelength to the guide line 13 and receiving the light reflected by the guide line 13 can be used. Specifically, the sensor 27 includes light-projecting units 27a and a light-receiving unit 27b. In the case where the fluorescence pigment is used as the guide line 13, the light-projecting units 27a of the sensor 27 irradiate ultraviolet light (black light) onto the guide line 13 and the periphery thereof, and the light-receiving unit 27b receives visible light that the fluorescence pigment of the guide line 13 radiates upon receiving the ultraviolet light. Receiving the visible light from the fluorescence pigment of the guide line 13, the light-receiving unit 27b converts information about the relative position and the like of the guide line 13 with respect to the light-receiving unit 27b into an electric signal and transmits the electric signal to the control device 21.

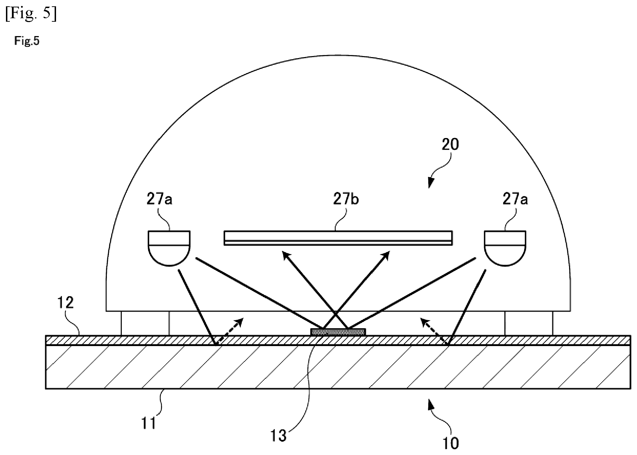

Fig. 5 schematically illustrates how the light irradiated from the light-projecting units 27a of the sensor 27 is received by the light-receiving unit 27b. The light-projecting units 27a of the traveling apparatus 20 irradiate ultraviolet light toward the travel path 10. As mentioned above, the travel path 10 is provided with the film 12 on the mirror 11, and in addition, the guide line 13 is formed on the film 12. Since the guide line 13 contains the fluorescence pigment, the guide line 13 receiving the ultraviolet light from the light-projecting units 27a jumps to an excited state and emits visible light when returning to the ground state. Receiving the visible light emitted from the fluorescence pigment, the light-receiving unit 27b of the sensor 27 detects the position of the guide line 13. Meanwhile, the ultraviolet light from the light-projecting units 27a is also irradiated onto portions of the travel path 10 other than the guide line 13. Here, in the travel path 10, the film 12, which blocks ultraviolet light, is attached to the mirror 11. Thus, the ultraviolet light irradiated onto the portions other than the guide line 13 is blocked by the film 12 and does not reach the mirror 11, or even in the case where the ultraviolet light reaches the mirror 11, the ultraviolet light is blocked again by the film 12, and most of its light energy is attenuated. Thus, as schematically illustrated in Fig. 5, the ultraviolet light irradiated onto the portions of the travel path 10 other than the guide line 13 does not reach the light-receiving unit 27b of the sensor 27, or even in the case where the ultraviolet light reaches the light-receiving unit 27b, the ultraviolet light does not have a light energy sufficient to be detected by the sensor 27. If the ultraviolet light irradiated by the light-projecting unit 27a is reflected by the mirror 11 and directly incident on the light-receiving unit 27b, there is a concern that the light energy of the ultraviolet light is so intense that the light-receiving unit 27b may fail to detect the guide line 13 or may erroneously detect the position of the guide line 13. In contrast, attaching the film 12 blocking ultraviolet light to the mirror 11 as in the present invention makes it possible to avoid an ultraviolet light irradiated from the light-projecting unit 27a being directly incident on the light-receiving unit 27b. Thus, it becomes possible to detect the position of the guide line 13 more reliably and accurately with the light-receiving unit 27b of the sensor 27.

As illustrated in Fig. 4, the traveling apparatus 20 may further include one or more light-emitting elements 28. A plurality of light-emitting elements 28 are electrically connected to the control device 21 via the electronic substrate or the like and are controlled by the control device 21. The cover 30 of the traveling apparatus 20 is transparent or translucent. Thus, when the light-emitting elements 28 emit light, the light passes through the cover 30 to be visually recognized from the outside. As the cover 30, for example, a known polycarbonate material or silicon material can be used. Furthermore, the cover 30 may include a one-way mirror. The one-way mirror transmits light traveling from the inside thereof toward the outside thereof and reflects light traveling from the outside toward the inside. In this case, for example, a one-way mirror film can be attached to the inner surface of the cover 30 constituted by a silicon member.

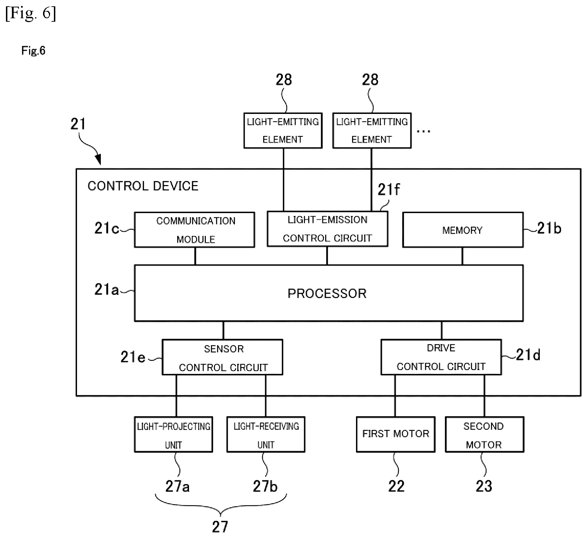

Fig. 6 is a block diagram illustrating a control system including the control device 21 as its core component. In an example illustrated in Fig. 6, the control device 21 includes a processor 21a, a memory 21b, a communication module 21c, a drive control circuit 21d, a sensor control circuit 21e, and a light-emission control circuit 21f. An example of the processor 21a is a known CPU or another control circuit. The processor 21a performs predetermined computation processing according to a program and data stored in the memory 21b, and executes various types of control processing while writing the results of the computation processing into a working space in the memory 21b. The memory 21b is constituted by, for example, a volatile memory such as a random access memory (RAM) or a nonvolatile memory such as a flash memory. The memory 21b is used in the above-described computation processing by the processor 21a. In the present embodiment, the processor 21a reads a program stored in the memory 21b and performs, according to the program, processing for driving the motors 22, 23 and causing the light-emitting elements 28 to emit light.

The communication module 21c is a piece of communication equipment to perform wireless communication with an external apparatus. The communication module 21c may be configured to perform wireless communication conforming to a known wireless communication standard, such as Wi-Fi (Registered Trademark), Bluetooth (Registered Trademark), or NFC, or to another proprietary standard, or at a frequency within a SubGHz band or the like, or may perform non-WLAN wireless communication, such as point-to-multipoint (P2MP) or Mesh communication. For example, via the communication module 21c, the control device 21 communicates with an external server apparatus (not illustrated). In this case, the control device 21 can control the driving states of the motors 22, 23 and the light-emitting states of the light-emitting elements 28, on the basis of instructions received from the external server apparatus. The control devices 21 of a plurality of traveling apparatuses 20 can also communicate with one another via their communication modules 21c. In this case, the plurality of traveling apparatuses 20 may share information to control the driving states of their motors 22, 23 and the light-emitting states of their light-emitting elements 28. For example, the plurality of traveling apparatuses 20 may share pieces of positional information thereon and adjust their traveling speeds so that they will not collide with one another on the travel path 10. For example, the plurality of traveling apparatuses 20 may share the pieces of positional information and change the light-emitting states of their light-emitting elements 28 in accordance with distances therebetween. Note that each of the traveling apparatuses 20 can use its communication module 21c to determine or estimate positional information thereon from NFC tags, Bluetooth (Registered Trademark) beacons, or the like that are arranged on lanes.

The drive control circuit 21d is a circuit that supplies, on the basis of a control instruction from the processor 21a, electric power from the battery to the first motor 22 and the second motor 23 such that the motors 22, 23 are each driven under predetermined rotating conditions (rotation speed, rotating direction, or the like). Note that, by switching the rotating directions of the motors 22, 23, the traveling apparatus 20 can be switched between forward movement and reverse movement. In addition, the drive control circuit 21d is capable of controlling the first motor 22 and the second motor 23 independently.

To be specific, in order to cause the traveling apparatus 20 to run in a straight line, the rotation speeds of the right and left motors 22, 23 are basically to be made equal to each other. In contrast, in order to cause the traveling apparatus 20 to run toward the right side, the rotation speed of the first motor 22, which is provided on the right side of the chassis, is made lower than the rotation speed of the second motor 23, which is provided on the left side of the chassis (or only the first motor 22 may be stopped). The traveling apparatus 20 can also be caused to turn clockwise by causing the first motor 22, which is provided on the right side of the chassis, to rotate in a backward direction and causing the second motor 23, which is provided on the left side of the chassis, to rotate in a forward direction. Likewise, in order to cause the traveling apparatus 20 to run toward the left side, the rotation speed of the first motor 22, which is provided on the right side of the chassis, is made higher than the rotation speed of the second motor 23, which is provided on the left side of the chassis (or only the second motor 23 may be stopped). The traveling apparatus 20 can also be caused to turn counterclockwise by causing the first motor 22, which is provided on the right side of the chassis, to rotate in the forward direction and causing the second motor 23, which is provided on the left side of the chassis, to rotate in the backward direction. In this manner, the running direction of the traveling apparatus 20 can be adjusted by controlling the rotation speeds and rotating directions of the motors 22, 23 independently.

The sensor control circuit 21e is a circuit that supplies, on the basis of a control instruction from the processor 21a, electric power from the battery to the light-projecting units 27a and the light-receiving unit 27b to control the on and off of the sensor 27 and transmit information (an electric signal) obtained from the light-receiving unit 27b to the processor 21a. On the basis of the positional information on the guide line 13 on the travel path 10 detected by the light-receiving unit 27b, the processor 21a generates a control instruction to drive the first motor 22 and the second motor 23 and outputs the control instruction to the drive control circuit 21d.

In the present embodiment, the traveling apparatus 20 is supposed to travel along the guide line 13 on the travel path 10 on the basis of the detection information from the sensor 27. Accordingly, the processor 21a is to generate the control instruction for the motors 22, 23 such that the center of the traveling apparatus 20 runs along the guide line 13. For example, in the case where the position of the guide line 13 coincides with the center of the traveling apparatus 20, it is only necessary to cause the traveling apparatus 20 to run in a straight line as is, and thus the rotation speeds of the first motor 22 and the second motor 23 are made equal to each other for a predetermined time period. In contrast, in the case where the position of the guide line 13 is to the right of the center of the traveling apparatus 20, it is necessary to cause the traveling apparatus 20 to run to the right. Thus, the rotation speed of the first motor 22 is made lower than that of the second motor 23 for a predetermined time period. Likewise, in the case where the position of the guide line 13 is to the left of the center of the traveling apparatus 20, it is necessary to cause the traveling apparatus 20 to run to the left. Thus, the rotation speed of the first motor 22 is made higher than that of the second motor 23 for a predetermined time period. Note that, in the case where the track of the guide line 13 is curved sharply, the traveling apparatus 20 can be caused to turn by making any one of the rotating directions of the first motor 22 and the second motor 23 opposite to the other. Adjusting the rotation speeds and/or the rotating directions of the motors 22, 23 on the basis of the detection information from the sensor 27 can cause the traveling apparatus 20 to travel along the track of the guide line 13.

The light-emission control circuit 21f is a circuit that supplies, on the basis of a control instruction from the processor 21a, electric power from the battery to the light-emitting elements 28 such that the light-emitting elements 28 emit light under predetermined light-emitting conditions (emitted-light color, luminance, or the like). The light-emission control circuit 21f can control the light-emitting elements 28 independently.

The traveling apparatus 20 additionally includes the battery (not illustrated). The battery may be a primary battery or may be a secondary battery. Note that the battery is preferably a secondary battery because the use of a rechargeable battery results in a high operational efficiency. The electric power of the battery is supplied to, for example, the control device 21, the motors 22, 23, the sensor 27, and the light-emitting elements 28.

Herein, an embodiment according to the present invention has been described above with reference to the accompanying drawings to express details of the present invention. The present invention is, however, not limited to the embodiment described above but encompasses modifications and improvements obvious to those skilled in the art based on the disclosure provided herein.

For example, the embodiment mentioned above employs, as travel controlling means of the traveling apparatus 20, means for adjusting the running direction of the traveling apparatus 20 by controlling the two motors 22, 23 independently. However, the travel controlling means of the traveling apparatus 20 are not limited to this. For example, a steering motor to change the orientation (yaw angle) of the one or more non-driving wheels (front wheels) by rotation can be provided in addition to the two motors to rotate the drive wheels (rear wheels), and by controlling the orientation of the non-driving wheels with the steering motor, the running direction of the entire traveling apparatus 20 can be adjusted. In this case, the two motors for rotating the drive wheels (rear wheels) need not be controlled independently, and it is sufficient to simply cause the motors to rotate at the same speed of rotation and in the same rotating direction. The running direction of the traveling apparatus 20 is determined by the orientation of the non-driving wheels. In addition, as the travel controlling means of the traveling apparatus 20, known means can be employed.

### Reference Signs List

- 10: travel path
- 11: mirror
- 12: film
- 13: guide line
- 20: traveling apparatus
- 21: control device
- 21a: processor
- 21b: memory
- 21c: communication module
- 21d: drive control circuit
- 21e: sensor control circuit
- 21f: light-emission control circuit
- 22: first motor
- 23: second motor
- 24: first wheel
- 25: second wheel
- 26: non-driving wheel
- 27: sensor
- 27a: light-projecting unit
- 27b: light-receiving unit
- 28: light-emitting element
- 30: cover
- 100: travel system

## Claims

1. A system comprising:
a travel path; and
a traveling apparatus that travels on the travel path, wherein
the travel path includes:
a mirror;
a film provided on the mirror, the film blocking light of a specific wavelength outside a visible range; and
a guide line provided on the film, the guide line reflecting light of the specific wavelength, and
the traveling apparatus includes:
a sensor irradiating light of the specific wavelength to detect the guide line; and
travel controlling means that travels along the guide line on a basis of detection information from the sensor.

2. The system according to claim 1, wherein
the guide line emits, upon receiving light of the specific wavelength, light of another wavelength, and
the sensor detects the light of the other wavelength.

3. The system according to claim 2, wherein
the guide line contains a fluorescence pigment.

4. The system according to claim 1, wherein
the film is a transparent or translucent film transmitting light within a visible range.

5. A travel path on which a traveling apparatus is to travel, comprising:
a mirror;
a film provided on the mirror, the film blocking light of a specific wavelength outside a visible range; and
a guide line for guiding travel of the traveling apparatus, the guide line being provided on the film and reflecting light of the specific wavelength.
